(19) **Europäisches Patentamt European Patent Office Office européen des brevets**

(11) **EP 4 556 296 B1**

(12) **EUROPEAN PATENT SPECIFICATION**

(45) Date of publication and mention of the grant of the patent:
**03.06.2026 Bulletin 2026/23**

(51) International Patent Classification (IPC):
**B60L 15/20** (2006.01)    **B60L 7/18** (2006.01)

(21) Application number: **23896224.5**

(52) Cooperative Patent Classification (CPC):
**B60L 7/18; B60L 3/0038; B60L 3/0061; B60L 3/12; B60L 15/2045;** B60L 2240/423; B60L 2260/42; B60L 2260/44; B60L 2270/145; B60W 30/20; B60W 2050/0041; B60W 2510/081; B60W 2510/082; B60W 2510/088; B60W 2710/083;
(Cont.)

(22) Date of filing: **26.09.2023**

(86) International application number:
**PCT/CN2023/121335**

(87) International publication number:
**WO 2024/114067 (06.06.2024 Gazette 2024/23)**

(54) **VEHICLE CONTROL METHOD, DEVICE AND MEDIUM.**

FAHRZEUGSTEUERUNGSVERFAHREN, VORRICHTUNG UND MEDIUM.

APPAREIL ET PROCÉDÉ DE COMMANDE DE VÉHICULE, DISPOSITIF ET SUPPORT.

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.11.2022  CN 202211522370**

(43) Date of publication of application:
**21.05.2025  Bulletin 2025/21**

(73) Proprietor: **Deepal Automobile Technology Co., Ltd.**
**Chongqing 401133 (CN)**

(72) Inventors:
- **MOU, Xiaolong**
  **Chongqing 401135 (CN)**
- **DENG, Chenghao**
  **Chongqing 401135 (CN)**
- **LI, Zonghua**
  **Chongqing 401135 (CN)**
- **DU, Changhong**
  **Chongqing 401135 (CN)**
- **CHEN, Jian**
  **Chongqing 401135 (CN)**

(74) Representative: **2K Patent Partnerschaft mbB**
**Hamburger Allee 26-28**
**60486 Frankfurt am Main (DE)**

(56) References cited:
| | |
|---|---|
| CN-A- 103 381 832 | CN-A- 104 670 213 |
| CN-A- 107 433 944 | CN-A- 110 406 389 |
| CN-A- 112 960 001 | CN-A- 113 263 923 |
| CN-A- 113 370 573 | CN-A- 113 370 573 |
| CN-A- 115 071 439 | CN-A- 115 782 617 |
| US-A1- 2013 184 918 | |

(52) Cooperative Patent Classification (CPC): (Cont.)
Y02T 10/72

**Description**

TECHNICAL FIELD

The present invention relates to the field of motor vibration control, and in particular, to a vehicle control method and apparatus, and device, medium, vehicle and product.

BACKGROUND

Active torsional vibration control of a battery electric vehicle is very important. Under the action of electromechanical coupling, a system has a relatively large quantity of interference torques, causing abnormal impact. This seriously affects reliability and vibration noise characteristics of a component of a powertrain system, directly affects riding experience of a passenger, also directly affects dynamics and an energy recovery capability, and further profoundly affects brand publicity. An improper vibration level even affects fatigue and durability performance of an important component, which affects driving safety of a person.

Currently, there are some problems in a common technical solution. When an accelerator pedal is pressed down, a technical measure to reduce a torque gradient is taken to avoid affecting driving smoothness. This affects dynamics of an entire vehicle. In addition, when the accelerator pedal is released, a technical measure to reduce energy recovery intensity is taken to avoid affecting driving smoothness. This affects economy of the entire vehicle. An underlying reason lies in that a dynamics model of the powertrain system is relatively complex, and there are errors caused by various clearances such as a tooth-side radial clearance, a tooth-side axial clearance, a spline clearance, a semi-axis ball cage contact clearance, and a bearing clearance. In addition, the component has flexibility, and may be circumferentially deformed. It is very difficult to describe these impact factors by using a very accurate mathematical model. In the entire system, torsional vibration accompanies a sudden change in a torque, causing a serious driving smoothness problem. Based on a current distributed control system architecture design, an entire vehicle control unit cannot calculate an execution torque for avoiding torsional vibration. Therefore, the entire vehicle control unit calculates only an initial value of the execution torque, which is modified and improved by a motor controller.

Currently, active torsional vibration control technical solutions commonly used in China or abroad include feedforward control and feedback control. Feedforward control mainly compensates for the torque directly by limiting an abnormal speed change in the system. Feedforward control is essentially speed closed-loop feedback control. This technical solution has relatively slight impact on dynamics. Because a low-pass filter is used, energy recovery intensity is relatively greatly affected, which is usually not conducive to energy recovery. There are also many feedback control solutions, which may be classified into two types based on different control objectives. One type is a control solution in which a fluctuation magnitude in a rotational speed of a motor is reduced, which is equivalent to reducing a time derivative of a relative angular displacement error. The other type is reducing a relative angular displacement error. Active control may be classified into two types based on different signal types to be used. A first type uses only a motor speed signal. A second type further uses a wheel speed signal in addition to using the motor speed signal. Active control may alternatively be classified into three types based on different control types. One type is a proportional-integral-derivative controller (PID), another type is using an optimal controller (LQR), and the last type is using a sliding mode controller (SMC). For example, both CN101550986A and CN112746875A can implement torsional vibration control. However, a current control solution is imperfect, and some dynamic performance and economic performance of the vehicle are compromised. If a plurality of controllers are switched at an algorithm level, it is likely that there is no solution to a problem or the torque abnormally changes suddenly. These control solutions all affect robustness of an entire control system.

CN 107433944 A discloses a driveline lash control method during driver tip-in/out. A vehicle includes a motor positioned between an engine and a driveline connected to a vehicle wheel, and a controller. The controller controls engine torque and maintains motor torque during wheel torque and driveline component torque reversals to limit a vehicle output torque rate of change through a lash region associated with a range of driveline torque ratios. A method of controlling a hybrid vehicle includes controlling engine torque to a specified profile and maintaining motor torque at a generally constant value during at least one of wheel torque and driveline component torque reversals to limit a vehicle output torque rate of change through a lash region associated with a range of driveline torque ratios.

CN 113370573 A discloses a clearance impact suppression system for a mechanical transmission system of a servo press. The system comprises a control system, the control system is connected with a motor through a power cable; an output shaft of the motor is mechanically connected with a speed reducer and is provided with an encoder, and a signal output end of the encoder is electrically connected with the control system; the speed reducer is connected with a sliding block through a crank connecting rod mechanism. According to a corresponding method, whether the transmission system is in a clearance state or not is judged in real time in the servo control process, and if in the clearance state, the motor is commanded to output small torque, so that the rotating speed difference between the driving side and the load side is limited, impact can be reduced, and the sliding block is driven by a crank-link mechanism to move up and down along a guide rail.

CN 103381832 A discloses a system and a method for improving the operation of a hybrid vehicle. In one embodiment, the power train gear backlash and impact of one gear tooth on another gear tooth can be reduced through adjustment of the operation of an electric machine.

CN 104670213 A discloses a torque control method for eliminating jitter caused in gaps of a car transmission system. The torque control method comprises the following steps: A, filtering a torque requested by a driver by a first filter coefficient; B, judging whether the torque requested by the driver and the filtered torque requested by the driver are reverse in direction or not; if reverse, determining that a first boundary value and a second boundary value of a torque region that causes the jitter, otherwise, continuously performing the judgment; C, judging whether the filtered torque requested by the driver is within a range between the first boundary value and the second boundary value, if the filtered torque requested by the driver is within the range, filtering the filtered torque requested by the driver by a second filter coefficient, otherwise, filtering the filtered torque requested by the driver by the first filter coefficient, and continuously performing the judgment in the step B. The torque control method has the advantages that when the transmission torque direction is changed, a problem that the whole car is caused to be jittered due to impact easily caused in a novel engaged tooth surface contact process can be effectively solved.

## SUMMARY

In view of the foregoing disadvantages of the conventional technology, the present invention provides a vehicle control method and apparatus, a device, a medium, a vehicle, and a product, to resolve the foregoing technical problems.

The present invention is set out in appended claim 1. Advantageous embodiments are the subject of the dependent claims.

Beneficial effects of the present invention are as follows:

The present invention provides a vehicle control method and apparatus, a device, and a medium. The method includes: obtaining a current working state of a vehicle; calculating a transmission error of the vehicle in the current working state; determining, based on the transmission error and a preset powertrain system equivalent clearance, whether the vehicle meets a state switching condition; and switching the current working state of the vehicle when the vehicle meets the state switching condition. According to the present invention, impact between components of the vehicle can be reduced, component durability can be improved, and energy recovery intensity can be strengthened without compromising driving smoothness.

## BRIEF DESCRIPTION OF DRAWINGS

The accompanying drawings herein are incorporated in this specification, constitute a part of this specification, show embodiments in accordance with this application, and are used with this specification to explain a principle of this application. Clearly, the accompanying drawings in the following descriptions are merely some embodiments of this application. A person of ordinary skill in the art may still derive other drawings from these accompanying drawings without creative efforts. In the accompanying drawings:

FIG. 1 is a schematic diagram of an implementation environment of a vehicle control method according to an example embodiment of this application;

FIG. 2 is a flowchart of a vehicle control method according to an example embodiment of this application;

FIG. 3 is a block diagram of a vehicle control apparatus according to an example embodiment of this application; and

FIG. 4 is a schematic structural diagram of a computer system of an electronic device suitable for implementing an embodiment of this application.

## DESCRIPTION OF EMBODIMENTS

The following describes implementations of the present invention with reference to accompanying drawings and preferred embodiments. A person skilled in the art can easily understand other advantages and effects of the present invention based on content disclosed in this specification. The present invention may be further implemented or applied by using other different specific implementations. Various details in this specification may also be modified or altered based on different viewpoints and applications without departing from the present invention. It should be understood that the preferred embodiments are merely intended to describe the present invention, and are not intended to limit the protection scope of the present invention.

It should be noted that the figures provided in the following embodiments merely schematically describe the basic concept of the present invention. Therefore, the figures display only components related to the present invention instead of being drawn based on a quantity, shapes, and sizes of components in actual implementation. Forms, the quantity, and a ratio of the components in actual implementation of the figures may be randomly changed, and a component layout form of the figures may also be more complex.

In the following descriptions, a large quantity of details are discussed to provide a more thorough explanation of the embodiments of the present invention. However, it is clear to a person skilled in the art that the embodiments of the present invention may be implemented without these specific details. In other embodiments, well-known structures and devices are shown in a block diagram rather than in a detail form, to avoid making the embodiments of the present invention difficult to understand.

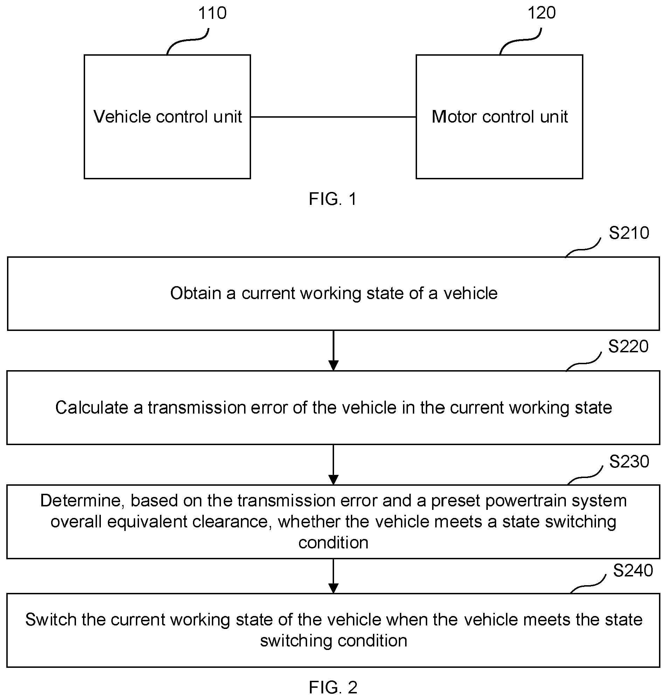

FIG. 1 is a schematic diagram of an example implementation environment of a vehicle control method according to this application. In this implementation environment, an entire vehicle control unit 110 and a motor control unit are included, and the entire vehicle control unit 110 and the motor control unit 120 exchange data through a CAN bus. In this implementation environment, the entire vehicle control unit may obtain a current working state of a vehicle; calculate a transmission error of the vehicle in the current working state; determine, based on the transmission error and a preset powertrain system equivalent clearance, whether the vehicle meets a state switching condition; and switch the current working state of the vehicle when the vehicle meets the state switching condition, to implement control of the vehicle. According to the present invention, impact between components of the vehicle can be reduced, component durability can be improved, and a larger torque rising gradient and a larger torque falling gradient can be allowed without compromising driving smoothness, to achieve stronger dynamics and stronger economy.

Embodiments of this application respectively provide a vehicle control method, a vehicle control apparatus, an electronic device, and a computer-readable storage medium. The following describes these embodiments in detail.

Before the vehicle control method and the vehicle control apparatus in the embodiments are described in detail, an active control policy is first described. A clear time variable mark is omitted, and a derivative also indicates to perform derivation on a time variable. A specific variable is used as an example. $\dfrac{d\theta(t)}{dt} = \dot{\theta}(t) = \dot{\theta}$ .

The active control policy is based on the following dynamics model.

It is considered to build a powertrain system torsional vibration mechanical model with a clearance(gap). If a moment of inertia of a motor rotor is $J_m$, an actual motor electromagnetic torque is $T_m$, a motor end equivalent viscous damping is $c_m$, a speed ratio is $\lambda$, and a powertrain system equivalent clearance included angle is $\alpha$, a motor end equivalent dynamics model is as follows:

$$J_m \ddot{\theta}_m = T_m - c_m \dot{\theta}_m - \frac{T_{hs}}{\lambda} \tag{1}$$

$$T_{hs} = \begin{cases} k_s\left(\Delta\theta - \mathrm{sgn}(\Delta\theta)\alpha\right) + c_s \Delta\dot{\theta} & |\Delta\theta| > \alpha \\ c_s \Delta\dot{\theta} & |\Delta\theta| \le \alpha \end{cases} \tag{2}$$

Herein, $J_m$ is the moment of inertia of the rotor, $\dot{\theta}_m$ is an angular velocity of the motor rotor, $\ddot{\theta}_m$ is angular acceleration of the motor rotor, $T_{hs}$ is a half-axis torque, $k_s$ is half-axis equivalent stiffness, $c_s$ is a half-axis equivalent viscous damping coefficient, sgn( ) is a symbol function, $\Delta\theta$ is a transmission error, and $\Delta\theta$ represents a difference between a motor end angular displacement and a wheel end angular displacement in a case of flexible transmission, $\Delta\dot{\theta}$ is a transmission error rate and is a time derivative of $\Delta\theta$, $|\Delta\theta| > \alpha$, which represents that a vehicle in a contact state, that is, is switched from a clearance state to the contact state, and $|\Delta\theta| \le \alpha$, which represents that the vehicle is in the clearance state, that is, is switched from the contact state to the clearance state.

The following transmission error (TE) is defined.

$$\Delta\theta = \frac{\theta_m}{\lambda} - \theta_w \tag{3}$$

Herein, $\theta_m$ is a motor angular displacement, and $\theta_w$ is the wheel end angular displacement, and is a relative angular displacement. The transmission error represents an error caused by the flexible transmission. An ideal value of the transmission error is zero on an assumption of rigid transmission. Actually, the transmission error is not zero, indicating that the powertrain system is flexible. An objective of active control is selected to control the following error quantity, to minimize a value of such error quantity:

$$\min \quad L = \frac{1}{2}\Delta\dot{\theta}^2 \qquad (4)$$

Then, actual motor electromagnetic torque of vehicle active control is defined as follows:

$$T_m = TqReq + \delta Tq \qquad (5)$$

Herein, *TqReq* is a requested torque sent by an entire vehicle control unit to a motor control unit, is a motor torque obtained after the entire vehicle control unit considers a real-time requirement of each subsystem, is converted from an accelerator pedal signal in most cases, and represents a direct current component of the actual motor electromagnetic torque; and $\delta Tq$ is a superposed torque, is a torque that needs to be superposed when driving smoothness is further considered, and represents an alternating current component of the actual motor electromagnetic torque.

The following new variable is introduced:

$$g_m = TqReq - c_m\dot{\theta}_m - J_m\ddot{\theta}_m \qquad (6)$$

In this way, an expression of a half-axis load or the half-axis torque may be obtained:

$$T_{hs} = \lambda\left(TqReq - c_m\dot{\theta}_m - J_m\ddot{\theta}_m\right) + \lambda\delta Tq = \lambda g_m + \lambda\delta Tq \qquad (7)$$

Through time derivation, half-axis torque rates in two states can be learned of:

$$\dot{T}_{hs} = \lambda\dot{g}_m + \lambda\delta\dot{Tq} = \begin{cases} k_s\Delta\dot{\theta} + c_s\Delta\ddot{\theta} & |\Delta\theta| > \alpha \\ c_s\Delta\ddot{\theta} & |\Delta\theta| \le \alpha \end{cases} \qquad (8)$$

To monitor a half-axis state, the transmission error $\Delta\theta$ needs to be calculated by performing real-time integration on the transmission error rate. Different integration formulas are selected based on different states:

$$\Delta\theta = \int \Delta\dot{\theta} dt = \begin{cases} c_s^{-1}\int (T_{hs} - k_s\left(\Delta\theta - \mathrm{sgn}\left(\Delta\theta\right)\alpha\right))dt & |\Delta\theta| > \alpha \\ c_s^{-1}\int T_{hs} dt & |\Delta\theta| \le \alpha \end{cases} \qquad (9)$$

It is assumed that an exact parameter is obtained through calibration and a test. The following deduces the detailed active control policy.

The active control policy includes a control policy in the clearance state and a control policy in the contact state.

In the clearance state, it is marked that $|\Delta\theta| \le \alpha$ is met in this case, and the control policy is deduced as follows:

$$\frac{dL}{dt} = \Delta\dot{\theta}\Delta\ddot{\theta} = c_s^{-2}T_{hs}\dot{T}_{hs} < 0 \Leftrightarrow T_{hs}\dot{T}_{hs} < 0 \qquad (10)$$

$$\Leftrightarrow \delta\dot{Tq} = -\frac{\Delta}{\left(g_m + \delta Tq\right)} - \dot{g}_m, \Delta > 0 \qquad (11)$$

Herein, $\Delta\dot\theta$ is a first derivative of $\Delta\theta$, $\Delta\ddot\theta$ is a second derivative of $\Delta\theta$, $\Delta$ is a control parameter.

It is assumed that the half-axis equivalent viscous damping coefficient is greater than zero.

In the contact state, it is marked that $|\Delta\theta|>\alpha$ is met in this case, and a control policy is deduced as follows:

$$\frac{dL}{dt} = \Delta\dot\theta\Delta\ddot\theta = \Delta\dot\theta c_s^{-1}\left(\dot T_{hs} - k_s\Delta\dot\theta\right) < 0$$

$$\Leftrightarrow \dot T_{hs}\Delta\dot\theta < k_s\Delta\dot\theta^2 \qquad\qquad (12)$$

$$\Leftrightarrow \delta\dot Tq = \frac{1}{\lambda}\left(k_s - \delta\right)\Delta\dot\theta - \dot g_m, \delta > 0$$

In combination of the foregoing two cases, it can be learned that the superposed torque is as follows:

$$\delta Tq = \begin{cases} \delta Tq_1 = \int(\frac{1}{\lambda}\left(k_s - \delta\right)\Delta\dot\theta - \dot g_m)dt & |\Delta\theta| > \alpha \\[2mm] \delta Tq_2 = \int -(\frac{\Delta}{\left(g_m + \delta Tq\right)} - \dot g_m)dt & |\Delta\theta| \le \alpha \end{cases} \qquad (13)$$

To resolve a robust control problem caused by parameter uncertainty, stability and convergence of an algorithm under impact of the uncertainty need to be analyzed, and a control algorithm needs to be optimized. The uncertainty can be attributed to an error $\eta$ (an angular acceleration uncertainty amplitude) of the angular acceleration. That is, the original equations (1) and (2) are modified to (14).

$$J_m\left(\ddot\theta_m + \eta\right) = T_m - c_m\dot\theta_m - \frac{T_{hs}}{\lambda}$$

$$T_{hs} = \begin{cases} k_s\left(\Delta\theta - \mathrm{sgn}\left(\Delta\theta\right)\alpha\right) + c_s\Delta\dot\theta & |\Delta\theta| > \alpha \\[2mm] c_s\Delta\dot\theta & |\Delta\theta| \le \alpha \end{cases} \qquad (14)$$

In an actual case, there is the following uncertainty limit:

$$\left|\eta\right| < \eta_B \qquad\qquad (15)$$

Herein, $\eta_B$ is a minimum value of an upper limit of the angular acceleration uncertainty amplitude.

When a parameter is proper, a lower limit of the uncertainty is very small, or a debugging purpose is to minimize a value in the foregoing formula. Angular acceleration uncertainty is amplified by the moment of inertia, is converted into half-axis torque uncertainty, and is retained in $g_m$, and the half-axis torque uncertainty is further transmitted to the relative angular displacement $\tilde g_m$ and a relative angular velocity $\dot{\tilde g}_m$.

$$\tilde g_m = g_m + J_m\eta$$

$$\dot{\tilde g}_m = \dot g_m \qquad\qquad (16)$$

If the angular acceleration uncertainty is invariant, or is invariant in a short time, a derivative term of $g_m$ is not affected. However, $g_m$ is actually a biased estimator, and represents that a denominator in an integration includes an uncertainty term in a case of a clearance. Therefore, formula (13) may be changed to obtain formula (17).

$$\delta Tq = \begin{cases} \delta Tq_1 = \int (\frac{1}{\lambda}(k_s - \delta)\Delta\dot{\theta} - \dot{g}_m)dt & |\Delta\theta| > \alpha \\ \delta Tq_2 = \int (-\frac{\Delta}{(\tilde{g}_m + \delta Tq)} - \dot{g}_m)dt & |\Delta\theta| \leq \alpha \end{cases} \qquad (17)$$

The uncertainty term essentially affects precise determining of a clearance moment, to further affect whether a control law integration policy is normally switched. To resolve this problem, a control law and parameter adaptation of the clearance moment need to be carefully designed. It can be learned through further deduction that an uncertainty parameter may be selected as follows:

$$\Delta = \lambda^2 J_m \left| \dot{g}_m + \delta\dot{T}q \right| \eta_B \geq \lambda^2 J_m \left( \dot{g}_m + \delta\dot{T}q \right) |\eta| \qquad (18)$$

Formula (18) provides a recommendation to a value of the control parameter $\Delta$. Such selection helps ensure robustness.

FIG. 2 is a flowchart of a vehicle control method according to an example embodiment of this application. The method may be applied to the implementation environment shown in FIG. 1, and is specifically performed by the entire vehicle control unit in the implementation environment. It should be understood that the method may also be applied to another example implementation environment, and is specifically performed by a device in the another implementation environment. This embodiment sets no limitation on an implementation environment to which the method is applicable.

FIG. 2 is a flowchart of a vehicle control method according to an example of this application. The vehicle control method includes at least step S210 to step S240. Details are described as follows:

Step S210: Obtain a current working state of a vehicle.
Step S220: Calculate a transmission error of the vehicle in the current working state.
Step S230: Determine, based on the transmission error and a preset powertrain system equivalent clearance, whether the vehicle meets a state switching condition.
Step S240: Switch the current working state of the vehicle when the vehicle meets the state switching condition.

According to the present invention, impact between components of the vehicle can be reduced, component durability can be improved, and energy recovery intensity can be strengthened without compromising driving smoothness.

The following describes the steps in the vehicle control method in detail.

In step S210, the current working state of the vehicle is obtained.

In this embodiment, working states of the vehicle includes a contact state and a clearance state, and the current working state is the contact state or the clearance state. When the solution of the present invention is analyzed, an initial state is usually set to the clearance state.

In step S220, the transmission error of the vehicle in the current working state is calculated.

The transmission error represents a difference between a motor end angular displacement and a wheel end angular displacement in a case of flexible transmission. The transmission error is an indicator for evaluating the working state of the vehicle, and is a value that changes in real time. When the transmission error is greater than a powertrain system equivalent clearance, it is defined as a working state of the vehicle, namely, the contact state; and when the transmission error is less than or equal to the powertrain system equivalent clearance, it is defined as another working state of the vehicle, namely, the clearance state. At an initial moment of program running, it is considered by default that the vehicle is in the clearance state, and an initial value of the transmission error is zero. The transmission error determines how to switch between different states. In different states, different calculation formulas are selected to calculate the transmission error.

In this embodiment, the transmission error is represented by $\Delta\theta$, and a calculation manner of the transmission error $\Delta\theta$ is performing integration on a transmission error rate.

$$\Delta\theta = \int \Delta\dot{\theta}dt$$

Because the working states of the vehicle include the two working states, namely, the contact state and the clearance state, there are two calculation manners of the transmission error.

In an embodiment, the transmission error is represented as follows:

$$\Delta\theta = \begin{cases} \Delta\theta_1 = c_s^{-1}\int (T_{hs} - k_s(\Delta\theta_1 - \text{sgn}(\Delta\theta_1)\alpha))dt, |\Delta\theta| > \alpha \\ \Delta\theta_2 = c_s^{-1}\int T_{hs}dt, |\Delta\theta| \le \alpha \end{cases}$$

Herein, $\Delta\theta_1$ is a first transmission error, $\Delta\theta_2$ denotes a second transmission error, $c_s$ denotes a half-axis equivalent viscous damping coefficient, $T_{hs}$ is a half-axis torque, $k_s$ is half-axis equivalent stiffness, and $\alpha$ is the powertrain system equivalent clearance.

To be specific, when the vehicle is in the contact state, the first transmission error is calculated based on a calculation formula of $\Delta\theta_1$; and when the vehicle is in the clearance state, the second transmission error is calculated based on a calculation formula of $\Delta\theta_1$.

In step S230, whether the vehicle meets the state switching condition is determined based on the transmission error and the preset powertrain system equivalent clearance.

To be specific, the calculated transmission error and the preset powertrain system equivalent clearance are compared, and whether the state switching condition is met is determined based on a comparison result. That is, whether the state switching condition is met is determined based on a value of $|\Delta\theta|$ and a value of $\alpha$.

In step S240, the current working state of the vehicle is switched when the vehicle meets the state switching condition.

When $|\Delta\theta| > \alpha$, it indicates that the vehicle meets the state switching condition, and the working state of the vehicle is switched from the clearance state to the contact state.

When $|\Delta\theta| \le \alpha$, it indicates that the vehicle meets the state switching condition, and the working state of the vehicle is switched from the contact state to the clearance state.

In an embodiment, the current working state of the vehicle is a clearance state or a contact state, and the state switching condition includes a first state switching condition and a second state switching condition;

a first transmission error of the vehicle in the clearance state is calculated when the current working state of the vehicle is the clearance state;

when the first transmission error is greater than the preset powertrain system equivalent clearance, the vehicle meets the first state switching condition, the current working state of the vehicle is switched from the clearance state to the contact state, the vehicle is controlled by using a first torque, and the first torque is a sum of a requested torque sent by an entire vehicle control unit to a motor control unit and a first superposed torque in the contact state;

a second transmission error of the vehicle in the contact state is calculated when the current working state of the vehicle is the contact state; and

when the second transmission error is less than or equal to the preset powertrain system equivalent clearance, the vehicle meets the second state switching condition, the current working state of the vehicle is switched from the contact state to the clearance state, the vehicle is controlled by using a second torque, and the second torque is a sum of the requested torque sent by the entire vehicle control unit to the motor control unit and a second superposed torque in the clearance state.

In an embodiment, the first torque is represented as $T_m \square TqReq + \delta Tq_1$, and the second torque is represented as $T_m \square TqReq + \delta Tq_2$.

$TqReq$ is the requested torque sent by the entire vehicle control unit to the motor control unit, and is a motor torque obtained after the entire vehicle control unit considers a real-time requirement of each subsystem. $\delta Tq_1$ is the first superposed torque of the vehicle in the contact state, and is an additional torque calculated by an electric drive control unit based on an active torsional vibration control requirement. $\delta Tq_2$ is the second superposed torque of the vehicle in the clearance state, and is an additional torque calculated by the electric drive control unit based on the active torsional vibration control requirement.

$$\delta Tq = \begin{cases} \delta Tq_1 = \int (\frac{1}{\lambda}(k_s - \delta)\Delta\dot{\theta}_1 - \dot{g}_m)dt, |\Delta\theta| > \alpha \\ \delta Tq_2 = \int (-\frac{\Delta}{(g_m + \delta Tq)} - \dot{g}_m)dt, |\Delta\theta| \le \alpha \end{cases}$$

Herein, $\lambda$ is a speed ratio, $\delta$ is a constant, $\Delta\dot{\theta}$ is a time derivative of $\Delta\dot{\theta}_1$, $g_m \square TqReq - c_m\dot{\theta}_m - J_m\ddot{\theta}_m$, $\dot{g}_m$ is a

derivative of $g_m$, $c_m$ is a motor end equivalent viscous damping, $\dot{\theta}_m$ is an angular velocity of a motor rotor, $J_m$ is a moment of inertia of the motor rotor, $\ddot{\theta}_m$ is real-time angular acceleration of the motor rotor, and $\Delta$ is a control parameter.

When the control parameter is proper, a lower limit of uncertainty is very small, or a debugging purpose is to minimize a value in the foregoing formula. Angular acceleration uncertainty is amplified by the moment of inertia, is converted into half-axis torque uncertainty, and is retained in $g_m$, and the half-axis torque uncertainty is further transmitted to a relative angular displacement $\tilde{g}_m$ and a relative angular velocity $\dot{\tilde{g}}_m$.

If the angular acceleration uncertainty is invariant, or is invariant in a short time, a derivative term of $g_m$ is not affected. However, $g_m$ is actually a biased estimator, and represents that a denominator in an integration includes an uncertainty term in a case of a clearance. Therefore, the superposed torque

$$\delta Tq = \begin{cases} \delta Tq_1 = \int (\frac{1}{\lambda}(k_s - \delta)\Delta\dot{\theta}_1 - \dot{g}_m)dt, |\Delta\theta| > \alpha \\ \delta Tq_2 = \int (-\dfrac{\Delta}{(g_m + \delta Tq)} - \dot{g}_m)dt, |\Delta\theta| \leq \alpha \end{cases}$$

may be converted, to obtain a new superposed torque.

In an embodiment, the new superposed torque is as follows:

$$\delta Tq = \begin{cases} \delta Tq_1 = \int (\frac{1}{\lambda}(k_s - \delta)\Delta\dot{\theta} - \dot{g}_m)dt, |\Delta\theta| > \alpha \\ \delta Tq_2 = \int (-\dfrac{\Delta}{(\tilde{g}_m + \delta Tq)} - \dot{g}_m)dt, |\Delta\theta| \leq \alpha \end{cases};$$

and

$$\tilde{g}_m = g_m + J_m\eta.$$

Herein, $\eta$ is an angular acceleration uncertainty amplitude.

It can be learned through further deduction that an uncertainty parameter (the control parameter) may be selected as follows:

$$\Delta = \lambda^2 J_m |\dot{g}_m + \delta\dot{T}q|\eta_B \geq \lambda^2 J_m (\dot{g}_m + \delta\dot{T}q)|\eta|.$$

The foregoing formula provides a solution to a value of the control parameter $\Delta$. Such selection helps ensure robustness.

As described above, a powertrain system of the vehicle has two working states, including the clearance state and the contact state. If the working state is the clearance state, an integration formula of the superposed torque $\delta Tq$ is $\int (-\dfrac{\Delta}{(g_m + \delta Tq)} - \dot{g}_m)dt$. Because an integral value includes an independent variable, an integral needs to be calculated in a specific manner. Herein, calculation through an implicit Euler integration formula is used as an example. An integration method is given. The method includes two substeps: integral prediction and integral correction.

For integral prediction, $\delta Tq_{pre} = \int (-\dfrac{\Delta}{(\tilde{g}_m + \delta Tq_k)} - \dot{g}_m)dt$.

For integral correction, $\delta Tq_{k+1} = \dfrac{1}{2}\left(\int (-\dfrac{\Delta}{(\tilde{g}_m + \delta Tq_{pre})} - \dot{g}_m)dt + \delta Tq_k\right)$, and an integral correction result is used as a final value, namely, a final superposed torque.

It should be understood that sequence numbers of steps in the foregoing embodiments do not mean execution sequences. Execution sequences of the processes should be determined according to functions and internal logic of the processes, and should not be construed as any limitation on the implementation processes of the embodiments of the present invention.

It should be noted that if the requested torque calculated by the entire vehicle control unit is incorrect or a calculated electromagnetic torque $T_m$ exceeds a specific amplitude, the amplitude needs to be limited, and the amplitude is controlled to fall within a specific range, to prevent the superposed torque from overflowing or being abnormal. An amplitude limitation output result is used as an integral initial value of a next time step.

If the motor runs in a mode other than the clearance state and the contact state, a power output is stopped or reduced, to avoid outputting an abnormal torque, and ensure normal running. For a motor working mode, the working mode is determined after the entire vehicle control unit combines requirements of all subsystems.

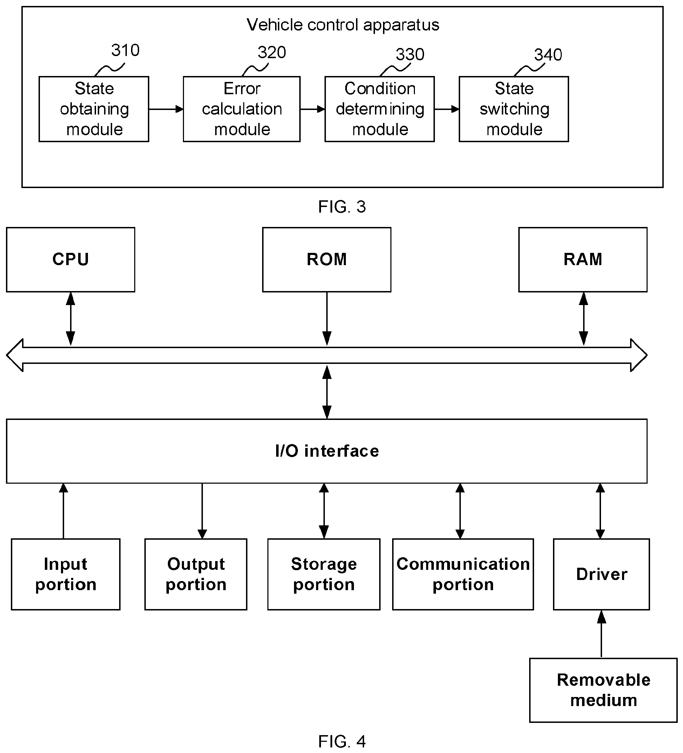

FIG. 3 is a block diagram of a vehicle control apparatus according to an example embodiment of this application. The apparatus may be applied to the implementation environment shown in FIG. 1, and is specifically configured in an entire vehicle control unit. The apparatus may also be applied to another example implementation environment, and is specifically configured in another device. This embodiment sets no limitation on an implementation environment to which the apparatus is applicable.

As shown in FIG. 3, this application provides a vehicle control apparatus. The apparatus includes:

a state obtaining module 310, configured to obtain a current working state of a vehicle;
an error calculation module 320, configured to calculate a transmission error of the vehicle in the current working state;
a condition determining module 330, configured to determine, based on the transmission error and a preset powertrain system equivalent clearance, whether the vehicle meets a state switching condition; and
a state switching module 340, configured to switch the current working state of the vehicle when the vehicle meets the state switching condition.

It should be noted that the vehicle control apparatus provided in the foregoing embodiment and the vehicle control method provided in the foregoing embodiments belong to a same concept. A specific manner in which each module and unit perform an operation is described in detail in the method embodiment. Details are not described herein again. In actual applications, the vehicle control apparatus provided in the foregoing embodiment may allocate the foregoing functions to different functional modules according to a requirement, that is, divide an internal structure of the apparatus into different functional modules, to complete all or some functions described above. This is not limited herein.

An embodiment of this application further provides an electronic device, including: one or more processors; and a storage apparatus, configured to store one or more programs. When the one or more programs are executed by one or more processors, the electronic device is enabled to implement the vehicle control method provided in the foregoing embodiments.

FIG. 4 is a schematic structural diagram of a computer system suitable for implementing an electronic device according to an embodiment of this application. It should be noted that the computer system of the electronic device shown in FIG. 4 is merely an example, and should not impose any limitation on a function and a use range of the embodiments of this application.

As shown in FIG. 4, the computer system includes a central processing unit (Central Processing Unit, CPU). The CPU may perform various proper actions and processing based on a program stored in a read-only memory (Read-Only Memory, ROM) or a program loaded from a storage portion to a random access memory (Random Access Memory, RAM), for example, perform the method provided in the foregoing embodiments. The RAM further stores various programs and data required for a system operation. The CPU, the ROM, and the RAM are connected to each other through a bus. An input/output (Input/Output, I/O) interface is also connected to the bus.

The following parts are connected to the I/O interface: an input portion including a keyboard, a mouse, and the like; an output portion including a cathode ray tube (Cathode Ray Tube, CRT), a liquid crystal display (Liquid Crystal Display, LCD), a speaker, and the like; the storage portion including a hard disk, and the like; and a communication portion including a network interface card such as a LAN (Local Area Network, local area network) card or a modem. The communication portion performs communication processing via a network such as the Internet. A driver is also connected to the I/O interface according to a requirement. A removable medium such as a magnetic disk, an optical disc, a magneto-optical disc, or a semiconductor memory is mounted on the driver according to a requirement, so that a computer program read from the removable medium is installed into the storage portion based on a requirement.

In particular, according to the embodiments of this application, a process described above with reference to the flowchart may be implemented as a computer software program. For example, in an embodiment of this application, a computer program product is included. The computer program product includes a computer program carried on a computer-readable medium, and the computer program includes a computer program used to perform the vehicle control method shown in FIG. 2. In such an embodiment, the computer program may be downloaded and installed from a network through the communication portion, and/or installed from the removable medium. When the computer program is executed by the central processing unit (CPU), various functions defined in the system of this application are executed.

It should be noted that the computer-readable medium described in the embodiments of this application may be a computer-readable signal medium, a computer-readable storage medium, or any combination thereof. The computer-readable storage medium may be, for example, an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. A more specific example of the computer-readable storage medium may include but is not limited to an electrical connection having one or more wires, a portable computer disk, a hard disk, a random access memory (RAM), a read-only memory (ROM), an erasable programmable read-only memory (Erasable Programmable Read Only Memory, EPROM), a flash memory, an optical fiber, a portable compact disk read-only memory (Compact Disc Read-Only Memory, CD-ROM), an optical storage device, a magnetic storage device, or any proper combination thereof. In this application, the computer-readable signal medium may include a data signal propagated in a baseband or as a part of a carrier, and carries a computer-readable computer program. The propagated data signal may be in a plurality of forms, including but not limited to an electromagnetic signal, an optical signal, or any suitable combination thereof. The computer-readable signal medium may alternatively be any computer-readable medium other than a computer-readable storage medium, and the computer-readable medium may send, propagate, or transmit a program used by or in combination with an instruction execution system, apparatus, or device. The computer program included in the computer-readable medium may be transmitted by using any proper medium, including but not limited to a wireless medium or a wired medium, or any proper combination thereof.

The flowcharts and block diagrams in the accompanying drawings show system architectures, functions, and operations that may be implemented by systems, methods, and computer program products according to various embodiments of this application. Each block in the flowcharts or block diagrams may represent a module, a program segment, or a part of code, and the module, the program segment, or the part of code includes one or more executable instructions for implementing a specified logical function. It should also be noted that, in some alternative implementations, a function marked in the block may also occur in a sequence different from that marked in the accompanying drawings. For example, two consecutively represented blocks may be actually executed substantially in parallel, and may sometimes be executed in a reverse order, depending on a function involved. It should also be noted that each block in the block diagrams or the flowcharts and a combination of blocks in the block diagrams or the flowcharts may be implemented by using a dedicated hardware-based system designed to perform a specified function or operation, or may be implemented by using a combination of dedicated hardware and computer instructions.

The units involved in the embodiments of this application may be implemented by using software, or may be implemented by using hardware, and the units described may also be disposed in a processor. Names of these units do not constitute a limitation on the units in a specified case.

Another aspect of this application further provides a computer-readable storage medium. The computer-readable storage medium stores a computer program, and when the computer program is executed by a processor of a computer, the computer is enabled to perform the foregoing vehicle control method. The computer-readable storage medium may be included in the electronic device described in the foregoing embodiments, or may exist separately, and is not assembled into the electronic device.

Another aspect of this application further provides a computer program product or a computer program. The computer program product or the computer program includes computer instructions, and the computer instructions are stored in a computer-readable storage medium. A processor of a computer device reads the computer instructions from the computer-readable storage medium, and the processor executes the computer instructions, to enable the computer device to perform the vehicle control method provided in the foregoing embodiments.

An embodiment of this application further provides a vehicle according to the present invention. The vehicle is controlled by using the vehicle control method shown in FIG. 2.

The foregoing embodiments merely illustrate principles and effects of the present invention, but are not intended to limit the present invention. Any person skilled in the art may modify or alter the foregoing embodiments without departing from the scope of the present invention as defined in the appended claims.

## Claims

1. A vehicle control method, comprising:

    (S210) obtaining a current working state of a vehicle;
    (S220) calculating a transmission error of the vehicle in the current working state;
    (S230) determining, based on the transmission error and a preset powertrain system equivalent clearance, whether the vehicle meets a state switching condition; and

(S240) switching the current working state of the vehicle when the vehicle meets the state switching condition; **characterized in that** the current working state of the vehicle is a clearance state or a contact state, and the state switching condition comprises a first state switching condition and a second state switching condition;

a first transmission error of the vehicle in the clearance state is calculated when the current working state of the vehicle is the clearance state;

when the first transmission error is greater than the preset powertrain system equivalent clearance, determining that the vehicle meets the first state switching condition, the current working state of the vehicle is switched from the clearance state to the contact state, the vehicle is controlled by using a first torque, and the first torque is a sum of a requested torque sent by an entire vehicle control unit (110) to a motor control unit (120) and a first superposed torque in the contact state;

a second transmission error of the vehicle in the contact state is calculated when the current working state of the vehicle is the contact state; and

when the second transmission error is less than or equal to the preset powertrain system equivalent clearance, determining that the vehicle meets the second state switching condition, the current working state of the vehicle is switched from the contact state to the clearance state, the vehicle is controlled by using a second torque, and the second torque is a sum of the requested torque sent by the entire vehicle control unit (110) to the motor control unit (120) and a second superposed torque in the clearance state;

wherein the transmission error is represented as follows:

$$\Delta\theta = \begin{cases} \Delta\theta_1 = c_s^{-1} \int \left( T_{hs} - k_s \left( \Delta\theta_1 - \mathrm{sgn}\left(\Delta\theta_1\right)\alpha \right) \right) dt, \left|\Delta\theta\right| > \alpha \\ \Delta\theta_2 = c_s^{-1} \int T_{hs} dt, \left|\Delta\theta\right| \le \alpha \end{cases},$$

wherein

$\Delta\theta_1$ is the first transmission error, $\Delta\theta_2$ denotes the second transmission error, $c_s$ denotes a half-axis equivalent viscous damping coefficient, $T_{hs}$ is a half-axis torque, $k_s$ is half-axis equivalent stiffness, and $\alpha$ is the powertrain system equivalent clearance.

2. The vehicle control method according to claim 1, wherein the first torque is represented as $T_m = TqReq + \delta Tq_1$, and the second torque is represented as

$$T_m \mathrel{?} \blacksquare = \blacksquare \mathrel{?} \boxminus TqReq + \delta Tq_2,$$

wherein

TqReq is the requested torque sent by the entire vehicle control unit (110) to the motor control unit (120), $\delta Tq_1$ is the first superposed torque, and $\delta Tq_2$ is the second superposed torque; and

$$\delta Tq = \begin{cases} \delta Tq_1 = \int \left( \frac{1}{\lambda} \left( k_s - \delta \right) \Delta\dot{\theta}_1 - \dot{g}_m \right) dt, \left|\Delta\theta\right| > \alpha \\ \delta Tq_2 = \int \left( -\frac{\Delta}{\left( g_m + \delta Tq \right)} - \dot{g}_m \right) dt, \left|\Delta\theta\right| \le \alpha \end{cases},$$

wherein

$\lambda$ is a speed ratio, $\delta$ is a constant, $\Delta\dot{\theta}$ is a time derivative of $\Delta\theta_1$, $g_m = TqReq - c_m \dot{\theta}_m - J_m \ddot{\theta}_m$, $\dot{g}_m$ is a derivative of $g_m$, $c_m$ is a motor end equivalent viscous damping, $\dot{\theta}_m$ is an angular velocity of a motor rotor, $J_m$ is a moment of inertia of the motor rotor, $\ddot{\theta}_m$ is real-time angular acceleration of the motor rotor, and $\Delta$ is a control parameter.

3. The vehicle control method according to claim 2, wherein the superposed torque is as follows:

$$\delta Tq = \begin{cases} \delta Tq_1 = \int (\frac{1}{\lambda}(k_s - \delta)\Delta\dot{\theta} - \dot{g}_m)dt, |\Delta\theta| > \alpha \\ \delta Tq_2 = \int (-\frac{\Delta}{(\tilde{g}_m + \delta Tq)} - \dot{g}_m)dt, |\Delta\theta| \le \alpha \end{cases} ;$$

and

$$\tilde{g}_m = g_m + J_m\eta ,$$

wherein
$\eta$ is an angular acceleration uncertainty amplitude.

4. The vehicle control method according to claim 3, wherein when the vehicle is in the clearance state, the superposed torque is as follows:

$$\delta Tq_{k+1} = \frac{1}{2}\left(\int (-\frac{\Delta}{(\tilde{g}_m + \delta Tq_{pre})} - \dot{g}_m)dt + \delta Tq_k\right) ,$$

and $\delta Tq_{pre} = \int (-\frac{\Delta}{(\tilde{g}_m + \delta Tq_k)} - \dot{g}_m)dt$ , wherein

$\delta Tq_{k+1}$ denotes a new second superposed torque, $|\eta| < \eta_B$, and $\eta_B$ is a minimum value of an upper limit of the angular acceleration uncertainty amplitude.

5. The vehicle control method according to claim 3, wherein the control parameter $\Delta$ is represented as follows:

$$\Delta = \lambda^2 J_m |\dot{g}_m + \delta \dot{Tq}|\eta_B \ge \lambda^2 J_m (\dot{g}_m + \delta \dot{Tq})|\eta| .$$

6. The vehicle control method according to claim 1 or 2, wherein the method further comprises:
limiting an amplitude of the requested torque when the requested torque is greater than a torque threshold.

7. An electronic device, wherein the electronic device comprises:

one or more processors; and
a storage apparatus, configured to store one or more programs, wherein when the one or more programs are executed by the one or more processors, the electronic device is enabled to implement steps of the vehicle control method according to any one of claims 1 to 6.

8. A computer-readable storage medium, wherein the computer-readable storage medium stores a computer program, and when the computer program is executed by a processor of a computer, the computer is enabled to perform steps of the vehicle control method according to any one of claims 1 to 6.

9. A vehicle comprising the electronic device according to claim 7.


**Patentansprüche**

1. Verfahren zur Steuerung eines Fahrzeugs, umfassend:

(S210) Erfassen eines aktuellen Betriebszustands eines Fahrzeugs;

(S220) Berechnen eines Übertragungsfehlers des Fahrzeugs im aktuellen Betriebszustand;

(S230) Bestimmen, basierend auf dem Übertragungsfehler und einem voreingestellten äquivalenten Spiel des Antriebsstrangsystems, ob das Fahrzeug eine Zustandsumschaltbedingung erfüllt; und

(S240) Umschalten des aktuellen Betriebszustands des Fahrzeugs, wenn das Fahrzeug die Zustandsumschaltbedingung erfüllt;

**dadurch gekennzeichnet, dass** der aktuelle Betriebszustand des Fahrzeugs ein Spielzustand oder ein Kontaktzustand ist und die Zustandsumschaltbedingung eine erste Zustandsumschaltbedingung und eine zweite Zustandsumschaltbedingung umfasst;

wobei ein erster Übertragungsfehler des Fahrzeugs im Spielzustand berechnet wird, wenn der aktuelle Betriebszustand des Fahrzeugs der Spielzustand ist;

wenn der erste Übertragungsfehler größer als das voreingestellte äquivalente Spiel des Antriebsstrangsystems ist, wird bestimmt, dass das Fahrzeug die erste Zustandsumschaltbedingung erfüllt, der aktuelle Betriebszustand des Fahrzeugs vom Spielzustand in den Kontaktzustand umgeschaltet wird, das Fahrzeug mit einem ersten Drehmoment gesteuert wird, und das erste Drehmoment eine Summe aus einem angeforderten Drehmoment, das von einer Fahrzeugsteuereinheit (110) an eine Motorsteuereinheit (120) gesendet wird, und einem ersten überlagerten Drehmoment im Kontaktzustand ist;

wobei ein zweiter Übertragungsfehler des Fahrzeugs im Kontaktzustand berechnet wird, wenn der aktuelle Betriebszustand des Fahrzeugs der Kontaktzustand ist;

wenn der zweite Übertragungsfehler kleiner oder gleich dem voreingestellten äquivalenten Spiel des Antriebsstrangsystems ist, wird bestimmt, dass das Fahrzeug die zweite Zustandsumschaltbedingung erfüllt, der aktuelle Betriebszustand des Fahrzeugs vom Kontaktzustand in den Spielzustand umgeschaltet wird, das Fahrzeug mit einem zweiten Drehmoment gesteuert wird, und das zweite Drehmoment eine Summe aus dem angeforderten Drehmoment, das von der gesamten Fahrzeugsteuereinheit (110) an die Motorsteuereinheit (120) gesendet wird, und einem zweiten überlagerten Drehmoment im Spielzustand ist;

wobei der Übertragungsfehler wie folgt dargestellt wird:

$$\Delta\theta = \begin{cases} \Delta\theta_1 = c_s^{-1}\int\left(T_{hs} - k_s\left(\Delta\theta_1 - \mathrm{sgn}\left(\Delta\theta_1\right)\alpha\right)\right)dt, \left|\Delta\theta\right| > \alpha \\ \Delta\theta_2 = c_s^{-1}\int T_{hs}\,dt, \left|\Delta\theta\right| \le \alpha \end{cases},$$

wobei

$\Delta\theta_1$ der erste Übertragungsfehler bezeichnet, $\Delta\theta_2$ den zweiten Übertragungsfehler bezeichnet, $c_s$ einen äquivalenten viskosen Dämpfungskoeffizienten einer Halbachse bezeichnet, $T_{hs}$ ein Halbachsdrehmoment bezeichnet, $k_s$ eine äquivalente Steifigkeit der Halbachse bezeichnet, und $\alpha$ das äquivalente Spiel des Antriebsstrangsystems bezeichnet.

2. Verfahren zur Steuerung eines Fahrzeugs nach Anspruch 1, wobei das erste Drehmoment als $T_m = TqReq + \delta Tq_1$ dargestellt wird und das zweite Drehmoment als $T_m = TqReq + \delta Tq_2$ dargestellt wird, wobei

$TqReq$ das von der gesamten Fahrzeugsteuereinheit (110) an die Motorsteuereinheit (120) gesendete angeforderte Drehmoment ist, $\delta Tq_1$ das erste überlagerte Drehmoment ist und $\delta Tq_2$ das zweite überlagerte Drehmoment ist;

$$\delta Tq = \begin{cases} \delta Tq_1 = \int\left(\frac{1}{\lambda}\left(k_s - \delta\right)\Delta\dot{\theta}_1 - \dot{g}_m\right)dt, \left|\Delta\theta\right| > \alpha \\ \delta Tq_2 = \int\left(-\frac{\Delta}{\left(g_m + \delta Tq\right)} - \dot{g}_m\right)dt, \left|\Delta\theta\right| \le \alpha \end{cases},$$

wobei

$\lambda$ ist ein Übersetzungsverhältnis, $\delta$ eine Konstante ist, $\Delta\dot{\theta}$ eine zeitliche Ableitung von $\Delta\theta_1$ ist, $g_m = TqReq - c_m\dot{\theta}_m - J_m\ddot{\theta}_m$, $\dot{g}_m$ eine Ableitung von $g_m$ ist, $c_m$ eine äquivalente viskose Dämpfung am Motorende ist, $\dot{\theta}_m$ eine Winkelgeschwindigkeit eines Motorrotors ist, $J_m$ ein Trägheitsmoment des Motorrotors ist, $\ddot{\theta}_m$ eine Echtzeit-Winkelbeschleunigung des Motorrotors ist und $\Delta$ ein Regelparameter ist.

3. Verfahren zur Steuerung eines Fahrzeugs nach Anspruch 2, wobei das überlagerte Drehmoment wie folgt ist:

$$\delta Tq = \begin{cases} \delta Tq_1 = \int (\frac{1}{\lambda}(k_s - \delta)\Delta\dot{\theta} - \dot{g}_m)dt, |\Delta\theta| > \alpha \\ \delta Tq_2 = \int (-\frac{\Delta}{(\tilde{g}_m + \delta Tq)} - \dot{g}_m)dt, |\Delta\theta| \leq \alpha \end{cases} ;$$

und

$$\tilde{g}_m = g_m + J_m\eta ,$$

wobei
$\eta$ eine Amplitude einer Unsicherheit der Winkelbeschleunigung ist.

4. Verfahren zur Steuerung eines Fahrzeugs nach Anspruch 3, wobei das überlagerte Drehmoment, wenn das Fahrzeug sich im Spielzustand befindet, wie folgt ist:

$$\delta Tq_{k+1} = \frac{1}{2}\left( \int (-\frac{\Delta}{(\tilde{g}_m + \delta Tq_{pre})} - \dot{g}_m)dt + \delta Tq_k \right) , \quad \text{und} \quad \delta Tq_{pre} = \int (-\frac{\Delta}{(\tilde{g}_m + \delta Tq_k)} - \dot{g}_m)dt ,$$

wobei
$\delta Tq_{k+1}$ ein neues zweites überlagertes Drehmoment bezeichnet, $|\eta| < \eta_B$, und $\eta_B$ ein Minimalwert einer Obergrenze der Amplitude der Unsicherheit der Winkelbeschleunigung ist.

5. Verfahren zur Steuerung eines Fahrzeugs nach Anspruch 3, wobei der Steuerparameter $\Delta$ wie folgt dargestellt ist:

$$\Delta = \lambda^2 J_m |\dot{g}_m + \delta\dot{T}q|\eta_B \geq \lambda^2 J_m (\dot{g}_m + \delta\dot{T}q)|\eta| .$$

6. Verfahren zur Steuerung eines Fahrzeugs nach Anspruch 1 oder 2, wobei das Verfahren weiter umfasst:
Begrenzung einer Amplitude des angeforderten Drehmoments, wenn das angeforderte Drehmoment größer als ein Drehmomentschwellenwert ist.

7. Elektronisches Gerät, wobei das elektronische Gerät umfasst:

ein oder mehrere Prozessoren; und
eine Speichervorrichtung, die dazu eingerichtet ist, ein oder mehrere Programme zu speichern, wobei bei Ausführung des einen oder der mehreren Programme durch den einen oder die mehreren Prozessoren die elektronische Vorrichtung dazu eingerichtet ist, die Schritte des Verfahren zur Steuerung eines Fahrzeugs nach einem der Ansprüche 1 bis 6 auszuführen.

8. Computerlesbares Speichermedium, wobei das computerlesbare Speichermedium ein Computerprogramm speichert, und wenn das Computerprogramm von einem Prozessor eines Computers ausgeführt wird, der Computer dazu eingerichtet wird, die Schritte des Verfahrens zur Steuerung eines Fahrzeugs nach einem der Ansprüche 1 bis 6 auszuführen.

9. Fahrzeug, umfassend die elektronische Vorrichtung nach Anspruch 7.

**Revendications**

1. Procédé de commande de véhicule, comprenant :

    (S210) l'obtention d'un état de fonctionnement actuel d'un véhicule ;
    (S220) le calcul d'une erreur de transmission du véhicule dans l'état de fonctionnement actuel ;
    (S230) la détermination, sur la base de l'erreur de transmission et d'un jeu équivalent de système de transmission de puissance prédéfini, pour savoir si le véhicule satisfait à une condition de commutation d'état ; et
    (S240) la commutation de l'état de fonctionnement actuel du véhicule lorsque le véhicule satisfait à la condition de commutation d'état ;
    **caractérisé en ce que** l'état de fonctionnement actuel du véhicule est un état de jeu ou un état de contact, et la condition de commutation d'état comprend une première condition de commutation d'état et une seconde condition de commutation d'état ;
    une première erreur de transmission du véhicule dans l'état de jeu est calculée lorsque l'état de fonctionnement actuel du véhicule est l'état de jeu ;
    lorsque la première erreur de transmission est supérieure au jeu équivalent de système de transmission de puissance prédéfini, la détermination du fait que le véhicule satisfait à la première condition de commutation d'état, l'état de fonctionnement actuel du véhicule est commuté de l'état de jeu à l'état de contact, le véhicule est commandé en utilisant un premier couple, et le premier couple est une somme d'un couple demandé envoyé par une unité de commande de véhicule entier (110) à une unité de commande de moteur (120) et d'un premier couple superposé dans l'état de contact ;
    une seconde erreur de transmission du véhicule dans l'état de contact est calculée lorsque l'état de fonctionnement actuel du véhicule est l'état de contact ; et
    lorsque la seconde erreur de transmission est inférieure ou égale au jeu équivalent de système de transmission de puissance prédéfini, la détermination du fait que le véhicule satisfait à la seconde condition de commutation d'état, l'état de fonctionnement actuel du véhicule est commuté de l'état de contact à l'état de jeu, le véhicule est commandé en utilisant un second couple, et le second couple est une somme du couple demandé envoyé par l'unité de commande de véhicule entier (110) à l'unité de commande de moteur (120) et d'un second couple superposé dans l'état de jeu ;
    dans lequel l'erreur de transmission est représentée comme suit :

$$\Delta\theta = \begin{cases} \Delta\theta_1 = c_s^{-1} \int \left(T_{hs} - k_s \left(\Delta\theta_1 - \mathrm{sgn}\left(\Delta\theta_1\right)\alpha\right)\right)dt, |\Delta\theta| > \alpha \\ \Delta\theta_2 = c_s^{-1} \int T_{hs} dt, |\Delta\theta| \leq \alpha \end{cases},$$

    dans laquelle
    $\Delta\theta_1$ est la première erreur de transmission, $\Delta\theta_2$ désigne la seconde erreur de transmission, cs désigne un coefficient d'amortissement visqueux équivalent de demi-essieu, $T_{hs}$ est un couple de demi-essieu, $k_s$ est une rigidité équivalente de demi-essieu, et $\alpha$ est le jeu équivalent de système de transmission de puissance.

2. Procédé de commande de véhicule selon la revendication 1, dans lequel le premier couple est représenté par $T_m = TqReq + \delta Tq_1$, et le second couple est représenté par

$$T_m = TqReq + \delta Tq_2,$$

    dans lequel

    TqReq est le couple demandé envoyé par l'unité de commande de véhicule entier (110) à l'unité de commande de moteur (120), $\delta Tq_1$ est le premier couple superposé, et $\delta Tq_2$ est le second couple superposé ; et

$$\delta Tq = \begin{cases} \delta Tq_1 = \int (\frac{1}{\lambda}(k_s - \delta)\Delta\dot{\theta}_1 - \dot{g}_m)dt, |\Delta\theta| > \alpha \\ \delta Tq_2 = \int (-\frac{\Delta}{(g_m + \delta Tq)} - \dot{g}_m)dt, |\Delta\theta| \le \alpha \end{cases},$$

dans laquelle

$\lambda$ est un rapport de vitesse, $\delta$ est une constante, $\Delta\dot{\theta}$ est une dérivée temporelle de $\Delta\theta_1$, $g_m = TqReq - c_m\dot{\theta}_m - J_m\ddot{\theta}_m$, $\dot{g}_m$ est une dérivée de $g_m$, $c_m$ est un amortissement visqueux équivalent côté moteur, $\dot{\theta}_m$ est une vitesse angulaire d'un rotor de moteur, $J_m$ est un moment d'inertie du rotor de moteur, $\ddot{\theta}_m$ est l'accélération angulaire en temps réel du rotor de moteur, et $\Delta$ est un paramètre de commande.

3. Procédé de commande de véhicule selon la revendication 2, dans lequel le couple superposé est le suivant :

$$\delta Tq = \begin{cases} \delta Tq_1 = \int (\frac{1}{\lambda}(k_s - \delta)\Delta\dot{\theta} - \dot{g}_m)dt, |\Delta\theta| > \alpha \\ \delta Tq_2 = \int (-\frac{\Delta}{(\tilde{g}_m + \delta Tq)} - \dot{g}_m)dt, |\Delta\theta| \le \alpha \end{cases};$$

et

$$\tilde{g}_m = g_m + J_m\eta,$$

dans laquelle

$\eta$ est une amplitude d'incertitude d'accélération angulaire.

4. Procédé de commande de véhicule selon la revendication 3, dans lequel lorsque le véhicule est dans l'état de jeu, le couple superposé est le suivant :

$$\delta Tq_{k+1} = \frac{1}{2}\left(\int (-\frac{\Delta}{(\tilde{g}_m + \delta Tq_{pre})} - \dot{g}_m)dt + \delta Tq_k\right), \text{ et } \delta Tq_{pre} = \int (-\frac{\Delta}{(\tilde{g}_m + \delta Tq_k)} - \dot{g}_m)dt,$$

dans lequel

$\delta Tq_{k+1}$ désigne un nouveau second couple superposé, $|\eta| < \eta_B$, et $\eta_B$ est une valeur minimale d'une limite supérieure de l'amplitude d'incertitude d'accélération angulaire.

5. Procédé de commande de véhicule selon la revendication 3, dans lequel le paramètre de commande $\Delta$ est représenté comme suit :

$$\Delta = \lambda^2 J_m \left|\dot{g}_m + \delta\dot{T}q\right|\eta_B \ge \lambda^2 J_m \left(\dot{g}_m + \delta\dot{T}q\right)|\eta|.$$

6. Procédé de commande de véhicule selon la revendication 1 ou 2, dans lequel le procédé comprend en outre :
   la limitation d'une amplitude du couple demandé lorsque le couple demandé est supérieur à un seuil de couple.

7. Dispositif électronique, dans lequel le dispositif électronique comprend :

   un ou plusieurs processeurs ; et
   un appareil de stockage, configuré pour stocker un ou plusieurs programmes, dans lequel lorsque les un ou plusieurs programmes sont exécutés par les un ou plusieurs processeurs, le dispositif électronique est activé pour mettre en œuvre les étapes du procédé de commande de véhicule selon l'une quelconque des revendications 1 à 6.

**8.** Support de stockage lisible par ordinateur, dans lequel le support de stockage lisible par ordinateur stocke un programme informatique, et lorsque le programme informatique est exécuté par un processeur d'un ordinateur, l'ordinateur est activé pour réaliser les étapes du procédé de commande de véhicule selon l'une quelconque des revendications 1 à 6.

**9.** Véhicule comprenant le dispositif électronique selon la revendication 7.

110

120

| Vehicle control unit | | Motor control unit |

FIG. 1

S210

Obtain a current working state of a vehicle

S220

Calculate a transmission error of the vehicle in the current working state

S230

Determine, based on the transmission error and a preset powertrain system overall equivalent clearance, whether the vehicle meets a state switching condition

S240

Switch the current working state of the vehicle when the vehicle meets the state switching condition

FIG. 2

Vehicle control apparatus

| 310 | 320 | 330 | 340 |
|---|---|---|---|
| State obtaining module | → Error calculation module | → Condition determining module | → State switching module |

FIG. 3

| CPU | ROM | RAM |
|---|---|---|

I/O interface

| Input portion | Output portion | Storage portion | Communication portion | Driver |
|---|---|---|---|---|

Removable medium

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101550986 A
- CN 112746875 A
- CN 107433944 A
- CN 113370573 A
- CN 103381832 A
- CN 104670213 A